# EUROPEAN PATENT SPECIFICATION

(11) **EP 3 817 265 B1**
(45) Date of publication and mention of the grant of the patent: **06.11.2024**
(21) Application number: 19814823.1
(22) Date of filing: 03.06.2019
(51) Int. Cl.: H04L 5/00, H04W 52/02, H04B 7/06, H04L 27/26, H04B 7/08

(54) **REFERENCE SIGNAL TRANSMITTING AND RECEIVING METHOD AND DEVICE**
VERFAHREN UND VORRICHTUNG ZUM ÜBERTRAGEN UND EMPFANGEN VON REFERENZSIGNALEN
PROCÉDÉ ET DISPOSITIF DE TRANSMISSION ET DE RÉCEPTION DE SIGNAL DE RÉFÉRENCE

(30) Priority: 04.06.2018 CN 201810566091; 20.09.2018 CN 201811120087
(43) Date of publication of application: 05.05.2021
(73) Proprietor: Datang Mobile Communications Equipment Co., Ltd., Beijing 100083 (CN)
(72) Inventor: MIAO, Deshan, Beijing 100191 (CN); CHENG, Fangchen, Beijing 100191 (CN); ZHANG, Di, Beijing 100191 (CN); YANG, Meiying, Beijing 100191 (CN)
(74) Representative: Maiwald GmbH
(86) International application number: PCT/CN2019/089794
(87) International publication number: WO 2019/233370

(56) References cited:
- WO-A1-2017/052252
- CN-A- 105 392 148
- CN-A- 106 304 174
- CN-A- 106 465 169
- US-A1- 2015 092 768
- US-B2- 9 344 248

## Description

### TECHNICAL FIELD

The present disclosure relates to the field of communications technology, in particular to a method and an apparatus of transmitting a reference signal, and a method and an apparatus of receiving a reference signal.

### BACKGROUND

In a Fifth Generation (5G) new radio (New Radio (NR)) system, a radio resource management (Radio Resource Management (RRM)) measurement for a radio resource control (Radio Resource Control (RRC)) idle state (RRC_IDLE) and an RRC inactive state (RRC_Inactive) depend on a synchronization signal block (Synchronization Signal Block (SSB)), because the SSB is a cell-specific signal, even a User Equipment (UE) configured in the RRC_IDLE can obtain information thereof. In a RRC connected state (RRC_Connected mode), there are two kinds of signals that can be used for the RRM measurement, the SSB or a channel state information reference signal (Channel State Information-Reference Signal (CSI-RS)). The UE selects a corresponding signal for the RRM measurement according to a configuration from a network. According to a definition of a relevant NR standard, a minimum transmission period of the SSB is 5ms, and a transmission period of the CSI-RS is 4 time slots. In order to obtain a valid RRM measurement value, such as a reference signal receiving power (Reference Signal Receiving Power (RSRP)) or a reference signal receiving quality (Reference Signal Receiving Quality (RSRQ)), it is necessary to measure multiple SSBs or multiple CSI-RSs to overcome an influence of channel fading and noise.

When the UE is in the RRC_IDLE or the RRC_Inactive, generally speaking, the UE needs to monitor a page signal and the RRM measurement periodically, so every time the UE wakes up from a discontinuous reception sleep (DRX-OFF), the UE needs to monitor the page signal and the RRM measurement. If the RRM measurement takes a long time, then the UE needs to keep an active state for a long time after waking up, because after the UE wakes up, if the UE completes monitoring the page signal but fails to receive the page signal and the RRM measurement is completed, the UE will return to the DRX-OFF. Simply speaking, a time duration of the RRM measurement will affect a wake-up time duration of the UE, that is, affect a power consumption of the UE since the longer the wake-up time duration is, the greater the power consumption is. This problem equally applies to a RRC connected state (RRC_Connected), because there is DRX configuration either, the RRM measurement is usually performed in a discontinuous reception activated state (DRX-ON) when the UE wakes up, so whether an RRM measurement parameter RSRP/RSRQ for the SSB or the CSI-RS is used, if a period of the SSB or the CSI-RS is longer, then a measurement time duration is longer and the power consumption is greater.

Therefore, in the RRM measurement of the UE in the 5G NR, no matter what state the UE is in, if the RRM measurement needs to be performed, a period of the reference signal will affect a waiting time of the measurement, resulting in increased power consumption of the UE.

An international patent publication No. WO 2017/052252A1 discloses a method for DRX in unlicensed band, and device using the method.

A U.S. patent publication No. US 2015/0092768A1 discloses a method for enhanced cell detection by a UE.

A U.S. patent No. US 9,344,248 B2 discloses a method in a wireless communication terminal, which is related to positioning reference signal assistance data signaling for enhanced interference coordination in a wireless communication network.

### SUMMARY

An objective of the present disclosure is to provide a method and an apparatus of transmitting a reference signal, and a method and apparatus of receiving a reference signal, as defined in accompanying claims, to solve the problem that an increase of power consumption of user equipment exists in a related transmission method.

The beneficial effects of the above technical solutions of the present disclosure are as follows. The method of transmitting a reference signal in the embodiment of the present disclosure is used for the user equipment to perform RRM measurement or channel parameter measurement or synchronization tracking, the reference signals are continuously transmitted through a preset number of subframes, so that the user equipment can receive the reference signal in consecutive subframes, and complete RRM measurement or channel parameter measurement or synchronization tracking based on the reference signal. Since long-term detection is not required, effectively reducing the power consumption of the user equipment is achieved.

### BRIEF DESCRIPTION OF THE DRAWINGS

FIG. 1 is a schematic flowchart of a method of transmitting a reference signal according to some embodiments of the present disclosure;
FIG. 2 is a first schematic diagram of transmission of a reference signal according to some embodiments of the present disclosure;
FIG. 3 is a second schematic diagram of transmission of a reference signal according to some embodiments of the present disclosure;
FIG. 4 is a third schematic diagram of transmission of a reference signal according to some embodiments of the present disclosure;
FIG. 5 is a schematic flowchart of a method of receiving a reference signal according to some embodiments of the present disclosure;
FIG. 6 is a schematic structural diagram of an apparatus of transmitting a reference signal according to some embodiments of the present disclosure;
FIG. 7 is a schematic structural diagram of an apparatus of receiving a reference signal according to some embodiments of the present disclosure;
FIG. 8 is a schematic structural diagram of a network device according to some embodiments of the present disclosure;
FIG. 9 is a schematic structural diagram of a user equipment according to some embodiments of the present disclosure;
FIG. 10 is a fourth schematic diagram of transmission of a reference signal according to some embodiments of the present disclosure;
FIG. 11 is a fifth schematic diagram of transmission of a reference signal according to some embodiments of the present disclosure.

### DETAILED DESCRIPTION

In order to make technical problems to be solved, technical solutions and advantages of the present disclosure clearer, a detailed description will be given below in conjunction with the accompanying drawings and specific embodiments.

In view of a problem that a related transmission method causes power consumption of a user equipment to be increased, the present disclosure provides a method of transmitting a reference signal, which reduces the power consumption of user equipment by changing a way of transmitting a reference signal.

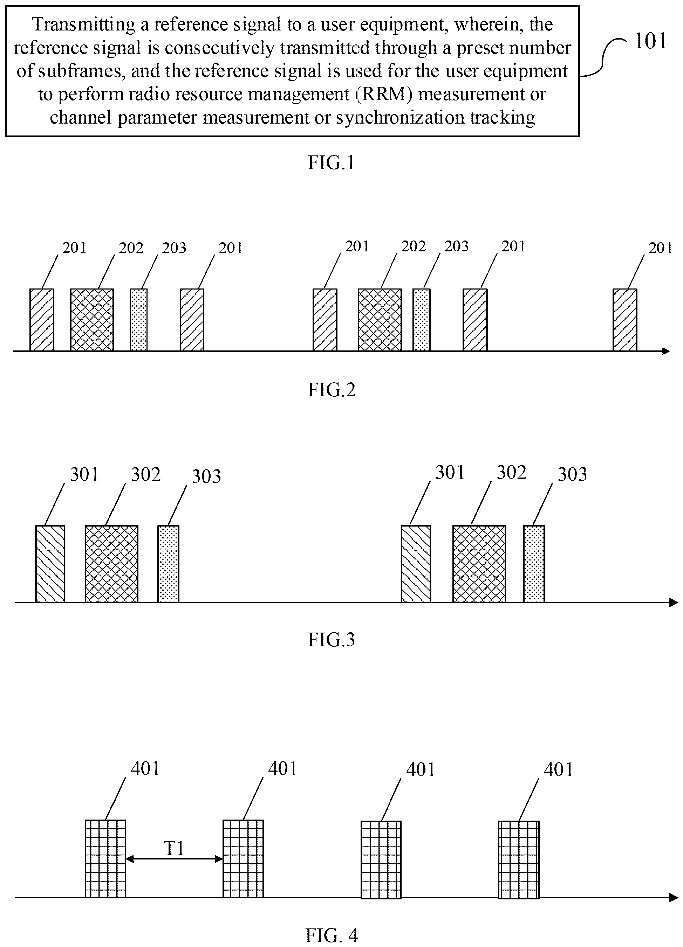

As shown in FIG. 1, a method of transmitting a reference signal according to some embodiments of the present disclosure is applied to a network device, and includes a step 101.

Step 101: transmitting a reference signal to a user equipment; where, the reference signal is continuously transmitted through a preset number of subframes, and the reference signal is used for the user equipment to perform synchronization tracking. In an example used to understand the technical solutions of the present application, the reference signal is used for the user equipment to perform radio resource management (RRM) measurement or channel parameter measurement.

In the embodiments of the present disclosure, the reference signal used for the user equipment to perform the synchronization tracking is continuously transmitted through the preset number of subframes, so that the user equipment can receive the reference signal in consecutive subframes, and complete the synchronization tracking based on the reference signal. Since there is no need for detection in a long duration, the problem of how to effectively reduce the power consumption of the user equipment is addressed.

The step 101 includes: transmitting the reference signal to the user equipment during a transition process of the user equipment from an inactive state to an active state.

Here, the transition process of the user equipment from the inactive state to the active state can be the transition process of just starting to enter the active state, or can also be the moment when the transition process ends before entering the active state, or the initial moment of entering the active state. The network device sends the reference signal to the user equipment, so that the user equipment receives the reference signal in time. Because the reference signal is sent in time, the user equipment can quickly perform the synchronization tracking to obtain accurate time and frequency-domain synchronization, and can also obtain channel parameter information and perform channel measurement, which is conducive to channel estimation and subsequent physical downlink control channel (Physical Downlink Control Channel (PDCCH)) detection; similarly, obtaining the reference signal in time is very important for performing the RRM measurement by the user equipment, and reducing a time duration of the RRM measurement. All of this is conducive to the user equipment to complete corresponding necessary processes in the shortest time and achieve the purpose of power-saving.

The transition process from the inactive state to the active state includes: the user equipment being configured in the radio resource control (RRC) connected state (RRC_Connected) or an RRC idle state (RRC_IDLE) or the RRC inactive state (RRC_Inactive mode); a state transition from discontinuous reception sleep (DRX-OFF) to discontinuous reception activation (DRX-ON); or a state transition from a sleep state to a normal data transmission and reception state; or a state transition from the sleep state to a control channel monitoring state after receiving a wake-up signal; wherein the sleep state means a state in which a transceiver circuit of the user equipment is in an off state or a partially off state, and a downlink control channel is not monitored.

In this embodiment, optionally, the step of transmitting the reference signal to the user equipment during the transition process of the user equipment from the inactive state to the active state includes: transmitting the reference signal to the user equipment based on a first preset period.

Here, the first preset period may be an integer multiple of a transmission period of a page signal, or may be an integer multiple of a DRX period. A network device such as a base station will periodically send the reference signal based on the first preset period. Because the page signal or DRX configuration is usually periodic, the first preset period of the reference signal can match these periods.

Optionally, the step of transmitting the reference signal to the user equipment during the transition process of the user equipment from the inactive state to the active state includes: after transmitting a wake-up signal to the user equipment, transmitting the reference signal to the user equipment.

Here, after the network device configures a wakeup signal for the user equipment and sends the wakeup signal to the user equipment, the reference signal is sent, so as to ensure that the user equipment can receive the reference signal in time during the transition process.

The step of transmitting the reference signal to the user equipment during the transition process of the user equipment from the inactive state to the active state includes: when the user equipment is configured in the RRC_IDLE or RRC_Inactive mode, and during the transition process from the inactive state to the active state, transmitting the reference signal to the user equipment, wherein the reference signal is a cell-specific reference signal or a reference signal shared by multiple user equipment groups.

Here, for a reference signal sent to a user equipment configured in the RRC_IDLE or RRC _Inactive mode, because a specific user equipment of receiving the reference signal cannot be clarified, the reference signal may be a cell-specific reference signal or a reference signal shared by multiple user equipment groups.

The step of transmitting the reference signal to the user equipment during the transition process of the user equipment from the inactive state to the active state includes: when the user equipment is configured in the RRC_Connected mode and is in the transition process from the inactive state to the active state, transmitting the reference signal to the user equipment, wherein the reference signal is a user-specific reference signal.

Here, for a reference signal sent to a user equipment configured in the RRC_Connected mode, because a specific user equipment of receiving the reference signal is clarified, the reference signal may optionally be a user-specific (UE specific) reference signal.

The step 101 includes: transmitting the reference signal in multiple beam directions.

It is known from the above contents that the reference signal is continuously transmitted through the preset number of subframes, thus has a denser signal pattern compared to that of the SSB and the CSI-RS. Here, the reference signal can be sent in multiple beam directions. Optionally, one slot or multiple slots appear consecutively, and each slot has one or more symbols containing the reference signal. Multiple consecutive signals are sent at a time, and the signals at a time are used to complete measurement of at least one RRM sample.

In this embodiment, the step 101 includes: when the user equipment is configured in the RRC_IDLE or RRC_Inactive mode, transmitting the reference signal to the user equipment based on a second preset period.

In an example used to understand the technical solutions of the present application, for the user equipment configured in the RRC_IDLE or the RRC_Inactive mode, the reference signal can be sent to the user equipment directly based on the second preset period. At this time, the user equipment mainly performs RRM measurement based on the reference signal, and performs cell selection based on a result of the RRM measurement. The reference signal may be a cell-specific reference signal, or a reference signal shared by multiple user equipment groups. Here, the second preset period can a suitable period configured according to an accuracy requirement of the RRM measurement. The purpose thereof is to facilitate management of user equipment mobility, and the user equipment can perform cell identification and cell selection based on the reference signal.

Optionally, the step 101 includes: transmitting the reference signal to the user equipment through a subframe spaced from the synchronization signal block (SSB) or the channel state information reference signal (CSI-RS) by a preset length.

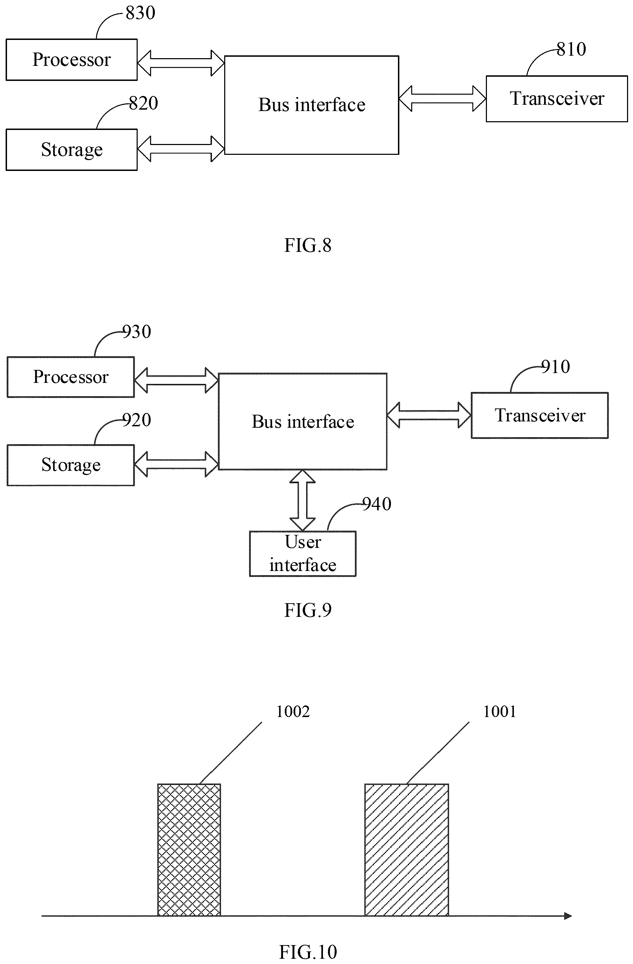

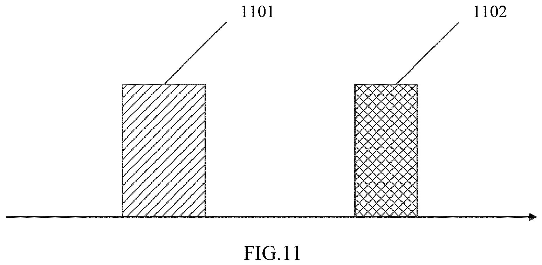

In an example used to understand the technical solutions of the present application, the preset length is set by a system or defined by a user. The preset length is usually set in an integer multiple of a subframe. If the preset length is 0, then the subframe is an adjacent subframe of the SSB or the CSI-RS, for example, the reference signal 1002 may be sent in a previous frame of the SSB 1001 as shown in FIG. 10, or the reference signal 1102 may be sent in a next frame of the SSB 1101 as shown in FIG. 11; if the preset length is N≥1, then there are N subframe between the subframe of the reference signal and the subframe of the SSB or the CSI-RS. In this way, the user equipment can obtain the reference signal around the SSB or the CSI-RS, thereby using the reference information and the SSB/CSI-RS for joint RRM measurement. Specifically, the reference signal is used to perform synchronization calibration or channel tracking first, then the SSB/CSI-RS is used to perform RRM measurement. The reference signal can be used for the initial moment when the user equipment has just changed from the inactive state to the active state, or the reference signal can also be configured on demand according to an operational state of the user equipment, such as when the user equipment has a low signal-to-noise ratio or the user equipment is in cell handover, configuring the reference signal can help the user equipment to perform the RRM measurement, because the reference signal can be used for more accurate synchronization calibration and channel tracking, such as automatic gain adjustment (AGC), so after the reference signal is used for synchronization calibration and channel tracking, an accuracy of the RRM measurement can be improved and a time duration of RRM measurement can be reduced.

In an example used to understand the technical solutions of the present application, the reference signal and the SSB or CSI-RS are in the same RRM measurement window.

In an example used to understand the technical solutions of the present application, for a RRM measurement window (RRM measurement gap) set for the RRM measurement, the reference signal and the SSB or CSI-RS are in the same RRM measurement window. In this way, the reference signal and the SSB/CSI-RS can be acquired simultaneously in one measurement, thus improving a processing efficiency.

In an example used to understand the technical solutions of the present application, for an RRM measurement occasion set for the RRM measurement, the reference signal and the SSB or the CSI-RS will appear in one measurement occasion at the same time, so as to reduce multiple processing times and improve an operational efficiency.

Optionally, the network device is a network device of a non-serving cell of the user equipment. Step 101 includes: transmitting the reference signal to the user equipment according to received coordination information, where the coordination information includes at least a request indication for transmitting the reference signal, and the coordination information is sent by a network device of a serving cell of the user equipment.

Here, the coordination information is determined by mutual coordination between the network device of the serving cell of the user equipment and the network device of the non-serving cell. The coordination information includes at least a request indication for transmitting the reference signal, which is used to indicate the network device of the non-serving cell of the user equipment to send the reference signal to the user equipment. The network device of the non-serving cell of the user equipment receives the coordination information, determines a time-frequency position for transmitting the reference signal, and notifies the time-frequency position to the network device of the serving cell of the user equipment.

In this way, when the user equipment performs cell handover, the network device of the serving cell of the user equipment and the network device of the non-serving cell (such as a base station of a neighboring cell of the user equipment or a base station using a different carrier frequency) coordinate with each other, the network device of the non-serving cell can transmit a reference signal to the user equipment according to the coordination information, so that the user equipment uses the reference signal to complete corresponding processing, for example, using the reference signal to perform synchronization calibration and channel tracking first, and then perform RRM measurement and data detection. Of course, a division for a non-serving network device and a serving network device depends on a network deployment and a handover method, the non-serving network device and the serving network device may be the same base station (that is, both the serving cell and neighboring cells of the user equipment correspond to the base station) or different base stations; if an intra-gNB handover occurs, then the same base station applies; if an inter-gNB handover occurs, then two different base stations apply, and information coordination needs to be performed through a defined interface (such as an X2 interface).

In addition, in order to ensure that the user equipment can receive the reference signal, based on the foregoing embodiment, the method further includes: transmitting a notification message to the user equipment, where the notification message is used to notify the user equipment to perform RRM measurement or channel parameter measurement or synchronization tracking based on the reference signal.

Here, the network device sends a notification message to the user equipment, so that the user equipment, through receiving the notification message, realizes the reception of the reference signal and processes the synchronization tracking.

The step of transmitting the notification message to the user equipment includes: transmitting, to the user equipment, system information or user equipment-specific signaling carrying the notification message; wherein, the notification message includes a transmission configuration parameter of the reference signal.

Here, the transmission configuration parameter will be used to instruct the user equipment to accurately receive the reference signal sent by the network device. The transmission configuration parameter is directed to a specific manner in which the network device transmits the reference signal, and the transmission configuration parameter may include: a transmission period of the reference signal, a transmission beam of the reference signal, a transmission pattern of the reference signal, and so on. In this way, after the user equipment is informed of the transmission period of the reference signal, the user equipment can correspondingly receive the reference signal periodically; after the user equipment is informed of the transmission beam of the reference signal, the user equipment can receive the reference signal on the transmission beam in a targeted manner, thereby reducing consumption of the beam scanning; after the user equipment is informed of the transmission pattern of the reference signal, the user equipment can receive the reference signal at a valid position. In addition, for configuration of the user equipment, on one hand, system information may be updated, and the notification message is carried in the updated system information, to inform the user equipment of the transmission configuration parameter of the reference signal. However, since a user equipment having an individual configuration does not receive the system information, such as the user equipment configured in the RRC _Connected mode, on the other hand, the notification message may be carried in a user equipment-specific signaling, such as an RRC signaling, to inform the user equipment of the transmission configuration parameter of the reference signal.

It can be known from the foregoing embodiment that the reference signal can be sent in a subframe spaced from the SSB/CSI-RS by a preset length. Therefore, to ensure that the user equipment accurately receives the reference signal, optionally, the transmission configuration parameter includes a time-frequency position at which the reference signal is transmitted.

In this way, in an example used to understand the technical solutions of the present application, the user equipment may accurately obtain the reference signal around the SSB/CSI-RS based on the time-frequency position, and then perform the RRM measurement.

In an example used to understand the technical solutions of the present application, in order for the user equipment to complete the required RRM measurement based on the reference signal, the network device configures the RRM measurement, so the notification message further includes RRM measurement configuration information.

In an example used to understand the technical solutions of the present application, the RRM measurement configuration information may include contents such as the number of measurement, a measured cell, and a measurement period.

Specific scenarios are described as follows.

Scenario 1: as shown in FIG. 2, for a user equipment configured in the RRC_IDLE mode, a reference signal 202 used for RRM measurement and corresponding to transmission of a synchronization signal block 201 has a denser signal pattern. The reference signal 202 for RRM measurement will be transmitted before each page transmission window 203.

Scenario 2: as shown in FIG. 3, for a user equipment configured in the RRC_IDLE mode and configured with a wake-up signal, a reference signal 302 used for RRM measurement will be sent after the wake-up signal 301 and before each page transmitting window 203.

Scenario 3: as shown in FIG. 4, for a user equipment configured in the RRC_IDLE or RRC_Inactive mode, the network device will send, at a period of T1 and consecutively in multiple slots, reference signals 401 to the user equipment for performing RRM measurement, regardless of whether there is paging or not. T1 may be adjusted according to a need of RRM measurement.

To sum up, in the method of transmitting a reference signal in the embodiments of the present disclosure, the reference signal used for performing RRM measurement or channel parameter measurement or synchronization tracking by a user equipment will be continuously sent through a preset number of subframes. In this way, the user equipment may receive reference signals in consecutive subframes, and complete the RRM measurement or the channel parameter measurement or the synchronization tracking based on the reference signals. Since detection persistent for a long time is not required, effectively reducing the power consumption of the user equipment is achieved.

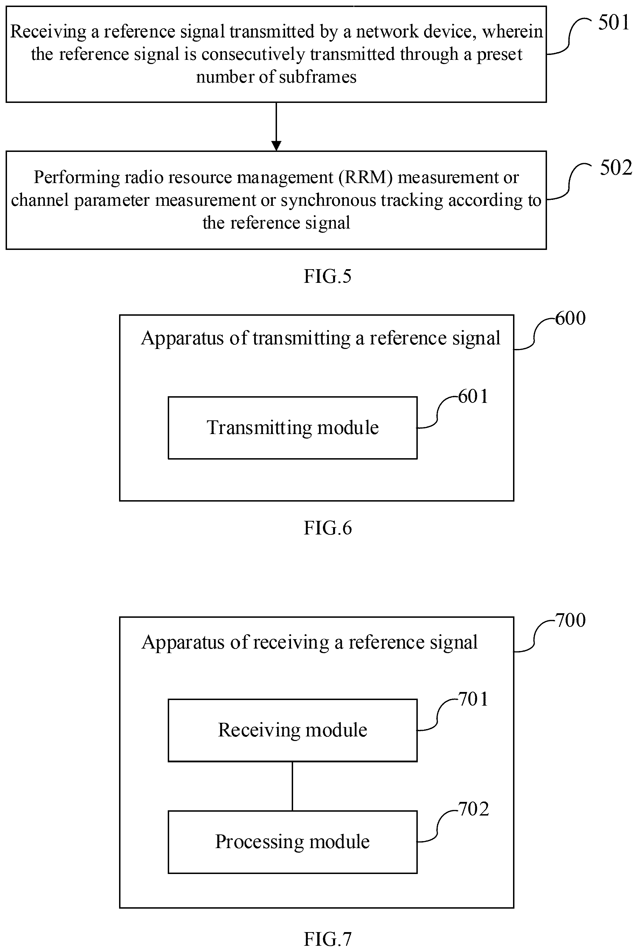

As shown in FIG. 5, the method of receiving a reference signal in an embodiment of the present disclosure is applied to a user equipment. The method includes steps 501-502.

Step 501: receiving a reference signal transmitted by a network device, where the reference signal is consecutively transmitted through a preset number of subframes.

Step 502: performing synchronous tracking according to the reference signal. In an example used to understand the technical solutions of the present application, the user equipment also performs RRM measurement or channel parameter measurement according to the reference signal.

In this embodiment, the user equipment will receive reference signals transmitted by the network device consecutively through a preset number of subframes, and after receiving the reference signals, perform RRM measurement or channel parameter measurement or synchronization tracking based on the reference signals. Since the user equipment can receive the reference signals in consecutive subframes, detection persistent for a long time is avoided, and effectively reducing the power consumption of the user equipment is achieved.

Step 501 includes: receiving the reference signal transmitted by the network device during a transition process of the user equipment from an inactive state to an active state.

Here, corresponding to the method of transmitting a reference signal in the previous embodiment, received is the reference signal sent by the network device during the transition process of the user equipment from the inactive state to the active state, so as to obtain the reference signal in time and complete subsequent processing.

The transition process from the inactive state to the active state includes: the user equipment being configured in the RRC_Connected state or the RRC_IDLE mode or the RRC _Inactive mode; a state transition from DRX-OFF to DRX-ON; or a state transition from a sleep state to a normal data transmission and reception state; or a state transition from the sleep state to a control channel monitoring state after receiving a wake-up signal; wherein the sleep state means a state in which a transceiver circuit of the user equipment is in an off state or a partially off state, and a downlink control channel is not monitored.

Optionally, the step of receiving the reference signal transmitted by the network device during the transition process of the user equipment from the inactive state to the active state includes: receiving, based on a first preset period, the reference signal transmitted by the network device.

Here, corresponding to the method of transmitting a reference signal in the previous embodiment, received is the reference signal transmitted by the network device based on the first preset period, so as to obtain the reference signal in time and complete subsequent processing.

Optionally, the step of receiving the reference signal transmitted by the network device during the transition process of the user equipment from the inactive state to the active state includes: receiving the reference signal after receiving a wake-up signal.

Here, corresponding to the method of transmitting a reference signal in the previous embodiment, received is the reference signal transmitted by the network device after transmitting the wake-up signal, so as to obtain the reference signal in time and complete subsequent processing. For example, if the user equipment is configured with a wake-up signal, then the user equipment first checks the wake-up signal, and if the user equipment finds existence of the wake-up signal, then the user equipment detects the reference signal after the wake-up signal.

Of course, if the user equipment corresponding to the reference signal is configured in the RRC_IDLE or RRC_Inactive mode, and the reference signal is transmitted during the transition process from the inactive state to the active state, the reference signal is a cell-specific reference signal or a reference signal shared by multiple user equipment groups; if the user equipment corresponding to the reference signal is configured in the RRC _Connected mode, the reference signal is transmitted in the transition process from the inactive state to the active state, the reference signal is a user-specific reference signal.

In addition, in the method of transmitting a reference signal in the previous embodiment, the user equipment configured in the RRC_IDLE or the RRC _Inactive mode can directly receive the reference signal sent to the user equipment in a second preset period. Therefore, step 501 includes: based on the second preset period, receiving the reference signal transmitted by the network device when the user equipment is configured in the RRC_IDLE or RRC _Inactive mode.

In an example used to understand the technical solutions of the present application, the reference signal is received based on the second preset period at which the network device transmitted the reference signal, so that the user equipment can perform RRM measurement based on the received reference signal.

Step 501 includes: receiving the reference signal in multiple beam directions.

Here, corresponding to the method of transmitting a reference signal in the previous embodiment, received is the reference signal transmitted by the network device in multiple beam directions.

In this embodiment, in order to accurately obtain the reference signal, the method further includes: receiving a notification message transmitted by the network device, where the notification message is used to notify the user equipment to perform synchronization tracking based on the reference signal.

By receiving the notification message, the user equipment realizes the reception of the reference signal and processes synchronization tracking.

The step of receiving the notification message transmitted by the network device includes: receiving system information or user equipment-specific signaling carrying the notification message; wherein, the notification message includes a transmission configuration parameter of the reference signal.

In the method of transmitting the reference signal in the foregoing embodiment, the transmission configuration parameter will be used to indicate that the user equipment accurately receives the reference signal transmitted by the network device, which will not be repeated here. For transmission carrying the transmission configuration parameters in different ways by the network device, the user equipment will receive updated system information on one hand and obtain the notification message carried in the system information according to configuration of the user equipment; on the other hand, the user equipment will receive a user equipment-specific signaling such as an RRC signaling and obtain the notification message carried in the user equipment-specific signaling.

Optionally, the transmission configuration parameter includes at least a time-frequency position at which the reference signal is transmitted.

In an example used to understand the technical solutions of the present application, the step of receiving the reference signal transmitted by the network device includes: according to the time-frequency position, obtaining the reference signal in a subframe spaced from the SSB or the CSI-RS by a preset length. The method further includes: in an RRM measurement process, after performing synchronization calibration or channel tracking according to the reference signal, using the SSB or the CSI-RS to perform RRM measurement.

In an example used to understand the technical solutions of the present application, in this way, corresponding to the reference signal transmitted in a subframe spaced from the SSB/CSI-RS by a preset length in the foregoing embodiment, the time-frequency position can ensure that the user equipment accurately receives the reference signal, and if the reference signal and the SSB/CSI-RS are in the same RRM measurement window, the user equipment can obtain the reference signal and the SSB/CSI-RS in the RRM measurement window, thus avoiding multiple processing times. Moreover, the user equipment can use the SSB or the CSI-RS to perform RRM measurement after using the reference signal for synchronization calibration or channel tracking.

In an example used to understand the technical solutions of the present application, in order for the user equipment to complete the required RRM measurement based on the reference signal, the network device configures the RRM measurement. Therefore, the notification message also includes RRM measurement configuration information.

The RRM measurement configuration information may include: the number of measurements, a measured cell, and a measurement period.

In an example used to understand the technical solutions of the present application, after the user equipment performs RRM measurement based on the received reference signal according to an instruction from the network device, further processing is required for the user equipment configured in the RRC_Connected mode, and the method further includes: when the user equipment is configured in the RRC_Connected mode, generating an RRM measurement result after the RRM measurement, and reporting the RRM measurement result to the network device.

However, when the user equipment is configured in the RRC_IDLE or RRC_Inactive mode, the RRM measurement result is no longer reported after the RRM measurement.

The method further includes: if a received power of the reference signal is less than a first threshold or a reception quality of the reference signal is less than the second threshold after the RRM measurement, starting RRM measurement to a neighboring cell.

In an example used to understand the technical solutions of the present application, for example, when a user equipment configured in RRC_IDLE or RRC _Inactive mode learns, according to the notification message in the system information, that the network device sends a reference signal dedicated to RRM measurement, the user equipment will perform monitoring before each page transmitting window, and perform RRM measurement after receiving the reference signal. When the received power RSRP of the reference signal for RRM measurement is less than the first threshold or the received quality RSRQ of the reference signal is less than the second threshold, the RRM measurement to the neighboring cell will be started. Here, the measurement to the neighboring cell can be based on the reference signal dedicated to the SSB or the RRM measurement of the neighboring cell.

Optionally, when the user equipment configured in the RRC_Connected mode learns, according to a notification message in an RRC instruction, that the network device sends a reference signal dedicated to RRM measurement, the user equipment will monitor and receive the reference signal to perform RRM measurement. Similarly, when the RSRP of the reference signal used for RRM measurement is less than the first threshold or the RSRQ is less than the second threshold, the RRM measurement to the neighboring cell will be started. Here, the measurement to the neighboring cell may be a reference signal dedicated to the SSB or the CSI-RS or the RRM measurement of the neighboring cell configured by the network.

If the user equipment is configured with DRX, each time a state transition occurs from DRX-OFF to DRX-ON, the reference signal dedicated to the RRM measurement is detected first.

In an example used to understand the technical solutions of the present application, the method further includes: performing cell selection according to a result of the RRM measurement.

Here, the network device directly periodically transmits reference signals to the user equipment configured in the RRC_IDLE or RRC _Inactive mode, and the user equipment performs RRM measurement based on the reference signal, and after the RRM measurement, the user equipment performs the cell selection based on the result of RRM measurement.

In summary, the user equipment receives the reference signals transmitted by the network device consecutively through a preset number of subframes, and after receiving the reference signals, the user equipment performs RRM measurement or channel parameter measurement or synchronization tracking based on the reference signals. Since the user equipment can receive the reference signals in consecutive subframes, detection persistent for a long time is avoided, and effectively reducing the power consumption of the user equipment is achieved.

As shown in FIG. 6, an apparatus 600 of transmitting a reference signal in this embodiment of the present disclosure is applied to network device. The apparatus includes a transmitting module 601.

The transmitting module 601 is used to transmit a reference signal to a user equipment; where, the reference signal is continuously transmitted through a preset number of subframes, and the reference signal is used for the user equipment to perform synchronization tracking. In an example used to understand the technical solutions of the present application, the reference signal is also used for the user equipment to perform radio resource management (RRM) measurement or channel parameter measurement.

The transmitting module 601 is further configured to transmit the reference signal to the user equipment during a transition process of the user equipment from an inactive state to an active state.

The transition process from the inactive state to the active state includes: the user equipment being configured in the radio resource control (RRC) connected state (RRC _Connected) or an RRC idle state (RRC_IDLE) or the RRC inactive state (RRC _Inactive mode); a state transition from discontinuous reception sleep (DRX-OFF) to discontinuous reception activation (DRX-ON); or a state transition from a sleep state to a normal data transmission and reception state; or a state transition from the sleep state to a control channel monitoring state after receiving a wake-up signal; wherein the sleep state means a state in which a transceiver circuit of the user equipment is in an off state or a partially off state, and a downlink control channel is not monitored.

The transmitting module 601 is further configured to transmit the reference signal to the user equipment based on a first preset period.

The transmitting module 601 is further configured to transmit the reference signal to the user equipment after transmitting a wake-up signal to the user equipment.

The transmitting module 601 is further configured to: when the user equipment is configured in the RRC_IDLE or RRC_Inactive mode, and during the transition process from the inactive state to the active state, transmit the reference signal to the user equipment, wherein the reference signal is a cell-specific reference signal or a reference signal shared by multiple user equipment groups.

The transmitting module 601 is further configured to: when the user equipment is configured in the RRC _Connected mode and is in the transition process from the inactive state to the active state, transmit the reference signal to the user equipment, wherein the reference signal is a user-specific reference signal.

The transmitting module 601 is further configured to transmit the reference signal in multiple beam directions.

The transmitting module 601 is further configured to: when the user equipment is configured in the RRC_IDLE or RRC _Inactive mode, transmit the reference signal to the user equipment based on a second preset period.

The transmitting module 601 is further configured to transmit the reference signal to the user equipment through a subframe spaced from a synchronization signal block (SSB) or a channel state information reference signal (CSI-RS) by a preset length.

The reference signal and the SSB or CSI-RS are in the same RRM measurement window.

The network device is a network device of a non-serving cell of the user equipment.

The transmitting module 601 is further configured to transmit the reference signal to the user equipment according to received coordination information, where the coordination information includes at least a request indication for transmitting the reference signal, and the coordination information is sent by a network device of a serving cell of the user equipment.

The apparatus further includes a notification transmission module.

The notification transmission module is configured to transmit a notification message to the user equipment, where the notification message is used to notify the user equipment to perform synchronization tracking based on the reference signal.

The notification transmission module is further configured to transmit, to the user equipment, system information or user equipment-specific signaling carrying the notification message; wherein, the notification message includes a transmission configuration parameter of the reference signal.

The notification message further includes RRM measurement configuration information.

The transmission configuration parameter includes a time-frequency position at which the reference signal is transmitted.

It should be noted that the apparatus is an apparatus that applies the foregoing method of transmitting a reference signal, and implementation of the foregoing method of transmitting the reference signal in the foregoing embodiment is applicable to the apparatus, and can also achieve the same technical effect, which will not be repeated here.

As shown in FIG. 7, an apparatus 700 of receiving a reference signal of in this embodiment of the present disclosure is applied to a user equipment. The apparatus 700 includes a receiving module 701 and a processing module 702.

The receiving module 701 is configured to receive a reference signal transmitted by a network device, where the reference signal is consecutively transmitted through a preset number of subframes.

The processing module 702 is configured to perform synchronous tracking according to the reference signal.

The receiving module 701 is further configured to receive the reference signal transmitted by the network device during a transition process of the user equipment from an inactive state to an active state.

The transition process from the inactive state to the active state includes: the user equipment being configured in the RRC _Connected state or the RRC_IDLE state or the RRC_Inactive mode; a state transition from DRX-OFF to DRX-ON; or a state transition from a sleep state to a normal data transmission and reception state; or a state transition from the sleep state to a control channel monitoring state after receiving a wake-up signal; wherein the sleep state means a state in which a transceiver circuit of the user equipment is in an off state or a partially off state, and a downlink control channel is not monitored.

The receiving module 701 is further configured to receive, based on a first preset period, the reference signal transmitted by the network device.

The receiving module 701 is further configured to receive the reference signal after receiving a wake-up signal.

The receiving module 701 is further configured to: based on a second preset period, receive the reference signal transmitted by the network device when the user equipment is configured in the RRC_IDLE or RRC _Inactive mode.

The receiving module 701 is further configured to receive the reference signal in multiple beam directions.

The apparatus further includes a notification reception module.

The notification reception module is configured to receive a notification message transmitted by the network device, where the notification message is used to notify the user equipment to perform synchronization tracking based on the reference signal.

The notification reception module is also configured to receive system information or user equipment-specific signaling carrying the notification message; wherein, the notification message includes a transmission configuration parameter of the reference signal.

The transmission configuration parameter includes at least a time-frequency position at which the reference signal is transmitted.

The receiving module 701 is further configured to: according to the time-frequency position, obtain the reference signal in a subframe spaced from the SSB or the CSI-RS by a preset length.

In an example used to understand the technical solutions of the presnt application, the apparatus further includes an RRM measurement module.

The RRM measurement module is configured to: in an RRM measurement process, after performing synchronization calibration or channel tracking according to the reference signal, use the SSB or the CSI-RS to perform RRM measurement.

In an example used to understand the technical solutions of the presnt application, the notification message further includes RRM measurement configuration information.

In an example used to understand the technical solutions of the presnt application, the processing module 702 is further configured to: when the user equipment is configured in the RRC _Connected mode, generate an RRM measurement result after the RRM measurement, and report the RRM measurement result to the network device.

In an example used to understand the technical solutions of the presnt application, the processing module 702 is further configured to: if a received power of the reference signal is less than a first threshold or a reception quality of the reference signal is less than the second threshold after the RRM measurement, start RRM measurement to a neighboring cell.

The processing module 702 is further configured to perform cell selection according to a result of the RRM measurement.

It should be noted that the apparatus is an apparatus that applies the above-mentioned method of receiving a reference signal, and implementation of the above-mentioned method of receiving a receiving signal in the foregoing embodiment is applicable to this apparatus, and the same technical effect can also be achieved, which will not be repeated here.

FIG. 8 shows an embodiment not covered by the claims. As shown in FIG. 8, a network device according to some embodiments of the present disclosure includes: a transceiver 810, a storage 820, a processor 830, and a computer program stored on the storage 820 and executable by the processor 830; the transceiver 810 is configured to transmit a reference signal to the user equipment; wherein, the reference signal is continuously transmitted through a preset number of subframes, and the reference signal is used for the user equipment to perform radio resource management (RRM) measurement or channel parameter measurement or synchronization tracking.

The transceiver 810 is further configured to transmit the reference signal to the user equipment during a transition process of the user equipment from an inactive state to an active state.

The transition process from the inactive state to the active state includes: the user equipment being configured in the radio resource control (RRC) connected state (RRC _Connected) or an RRC idle state (RRC_IDLE) or the RRC inactive state (RRC_Inactive mode); a state transition from discontinuous reception sleep (DRX-OFF) to discontinuous reception activation (DRX-ON); or a state transition from a sleep state to a normal data transmission and reception state; or a state transition from the sleep state to a control channel monitoring state after receiving a wake-up signal; wherein the sleep state means a state in which a transceiver circuit of the user equipment is in an off state or a partially off state, and a downlink control channel is not monitored.

The transceiver 810 is further configured to transmit the reference signal to the user equipment based on a first preset period.

The transceiver 810 is further configured to transmit the reference signal to the user equipment after transmitting a wake-up signal to the user equipment.

The transceiver 810 is further configured to: when the user equipment is configured in the RRC_IDLE or RRC _Inactive mode, and during the transition process from the inactive state to the active state, transmit the reference signal to the user equipment, wherein the reference signal is a cell-specific reference signal or a reference signal shared by multiple user equipment groups.

The transceiver 810 is further configured to: when the user equipment is configured in the RRC _Connected mode and is in the transition process from the inactive state to the active state, transmit the reference signal to the user equipment, wherein the reference signal is a user-specific reference signal.

The transceiver 810 is further configured to transmit the reference signal in multiple beam directions.

The transceiver 810 is further configured to: when the user equipment is configured in the RRC_IDLE or RRC _Inactive mode, transmit the reference signal to the user equipment based on a second preset period.

The transceiver is further configured to transmit the reference signal to the user equipment through a subframe spaced from the synchronization signal block (SSB) or the channel state information reference signal (CSI-RS) by a preset length.

The reference signal and the SSB or CSI-RS are in the same RRM measurement window.

The network device is a network device of a non-serving cell of the user equipment;

The transceiver is further configured to: transmit the reference signal to the user equipment according to received coordination information, where the coordination information includes at least a request indication for transmitting the reference signal, and the coordination information is sent by a network device of a serving cell of the user equipment.

The transceiver 810 is further configured to: transmit a notification message to the user equipment, where the notification message is used to notify the user equipment to perform synchronization tracking based on the reference signal.

The transceiver 810 is also configured to: transmit, to the user equipment, system information or user equipment-specific signaling carrying the notification message; wherein, the notification message includes a transmission configuration parameter of the reference signal.

In an example used to understand the technical solutions of the presnt application, the notification message further includes RRM measurement configuration information.

The transmission configuration parameter includes a time-frequency position at which the reference signal is transmitted.

In FIG. 8, a bus architecture may include any number of interconnected buses and bridges. Specifically, various circuits such as one or more processors represented by the processor 830 and a storage represented by the storage 820 are linked together. The bus architecture can also link various other circuits such as peripheral devices, voltage regulators, power management circuits, etc., which are all known in the art, and therefore, will not be further described herein. A bus interface provides an interface. The transceiver 810 may be a plurality of elements, that is, including a transmitter and a transceiver, and provides units for communicating with various other devices on a transmission medium. The processor 830 is responsible for managing the bus architecture and general processing, and the storage 820 may store data used by the processor 830 when performing operations.

FIG. 9 shows an embodiment not covered by the claims, As shown in FIG. 9, a user equipment according to some embodiments of the present disclosure includes: a transceiver 910, a storage 920, a processor 930, and a computer program stored on the storage 920 and executable on the processor 930.

The transceiver 910 is configured to receive a reference signal transmitted by a network device, where the reference signal is consecutively transmitted through a preset number of subframes.

The processor 930 is configured to perform synchronous tracking according to the reference signal.

The transceiver 910 is further configured to receive the reference signal transmitted by the network device during a transition process of the user equipment from an inactive state to an active state.

The transition process from the inactive state to the active state includes: the user equipment being configured in the RRC _Connected state or the RRC_IDLE mode or the RRC_Inactive mode; a state transition from DRX-OFF to DRX-ON; or a state transition from a sleep state to a normal data transmission and reception state; or a state transition from the sleep state to a control channel monitoring state after receiving a wake-up signal; wherein the sleep state means a state in which a transceiver circuit of the user equipment is in an off state or a partially off state, and a downlink control channel is not monitored.

The transceiver 910 is further configured to receive, based on a first preset period, the reference signal transmitted by the network device.

The transceiver 910 is further configured to receive the reference signal after receiving a wake-up signal.

The transceiver 910 is further configured to: based on a second preset period, receive the reference signal transmitted by the network device when the user equipment is configured in the RRC_IDLE or RRC _Inactive mode.

The transceiver 910 is further configured to receive the reference signal in multiple beam directions.

The transceiver 910 is further configured to receive a notification message transmitted by the network device, where the notification message is used to notify the user equipment to perform synchronization tracking based on the reference signal.

The transceiver 910 is also configured to receive system information or user equipment-specific signaling carrying the notification message; wherein, the notification message includes a transmission configuration parameter of the reference signal.

The transmission configuration parameter includes at least a time-frequency position at which the reference signal is transmitted.

The transceiver is further configured to: according to the time-frequency position, obtain the reference signal in a subframe spaced from the SSB or the CSI-RS by a present length. The processor is further configured to: in an RRM measurement process, after performing synchronization calibration or channel tracking according to the reference signal, use the SSB or the CSI-RS to perform RRM measurement.

The notification message also includes RRM measurement configuration information.

The processor 930 is further configured to: when the user equipment is configured in the RRC_Connected mode, generate an RRM measurement result after the RRM measurement, and reporting the RRM measurement result to the network device.

The processor 930 is further configured to: if a received power of the reference signal is less than a first threshold or a reception quality of the reference signal is less than a second threshold after the RRM measurement, start RRM measurement to a neighboring cell.

The processor 930 is further configured to perform cell selection according to the RRM measurement result.

The transceiver 910 is configured to receive and transmit data under a control of the processor 930.

In FIG. 9, a bus architecture may include any number of interconnected buses and bridges. Specifically, various circuits such as one or more processors represented by the processor 930 and a memory represented by the storage 920 are linked together. The bus architecture can also link various other circuits such as peripheral devices, voltage regulators, power management circuits, etc., which are all known in the art, and therefore, will not be further described herein. A bus interface provides an interface. The transceiver 910 may be a plurality of elements, that is, include a transmitter and a receiver, and provide units for communicating with various other devices on a transmission medium. For different user equipments, a user interface 940 may also be an interface capable of connecting externally and internally with a required equipment. The connected equipment includes but not limited to a keypad, a display, a speaker, a microphone, a joystick, etc.

The processor 930 is responsible for managing the bus architecture and general processing, and the storage 920 can store data used by the processor 930 when performing operations.

Another embodiment not covered by the claims of the present disclosure further provides a computer-readable storage medium having a computer program stored on the computer-readable storage medium, and when the computer program is executed by a processor, steps in the method of transmitting a reference signal as described above is implemented.

Another embodiment not covered by the claims of the present disclosure further provides a computer-readable storage medium having a computer program stored on the computer-readable storage medium, and when the computer program is executed by a processor, steps in the method of receiving a reference signal as described above is implemented.

Computer-readable media include a permanent or non-permanent medium, or a removable or non-removable medium, and information storage can be implemented by any method or technology. The information can be computer-readable instructions, data structures, program modules, or other data. Examples of computer storage media include, but are not limited to, a phase-change random access memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a compact disc read-only memory (CD-ROM), a digital versatile disc (DVD) or other optical storage, magnetic cassettes, a magnetic-tape magnetic-disk storage or other magnetic storage devices or any other non-transmission media can be used to store information that can be accessed by computing devices. According to definitions herein, the computer-readable media do not include transitory media, such as modulated data signals and carrier waves.

It should be further noted that the user equipment described in this specification includes, but is not limited to, smart phones, tablet computers, etc., and many of described functional components are referred to as modules, in order to more particularly emphasize independence of their implementations.

In the embodiments of the present disclosure, modules may be implemented by software so as to be executed by various types of processors. For example, an identified executable code module may include one or more physical or logical blocks of computer instructions, for example, may be constructed as an object, a process, or a function. Nevertheless, identified executable code modules do not need to be physically located together, but can include different instructions stored in different locations. When these instructions are logically combined together, they constitute a module and implement required purpose of the module.

In fact, an executable code module can be a single instruction or many instructions, and can even be distributed across multiple different code segments, distributed in different programs, and distributed across multiple memory devices. Likewise, operating data can be identified within the module, and can be implemented in any suitable form and organized in any suitable type of data structure. The operating data may be collected as a single data set, or may be distributed in different locations (including on different storage devices), and at least partly may only exist as electronic signals on a system or a network.

When a module can be implemented by software, considering a level of related hardware technology, the module can be implemented by software. Without considering costs, those skilled in the art can build a corresponding hardware circuit to realize a corresponding function. The hardware circuit includes a conventional very large-scale integration (VLSI) circuits or gate arrays, and related semiconductors such as logic chips, transistors, or other discrete components. Modules can also be implemented with programmable hardware devices, such as field programmable gate arrays, programmable array logic, programmable logic devices, etc.

The above exemplary embodiments are described with reference to these drawings. Therefore, the present disclosure should not be constructed as a limitation to the exemplary embodiments presented herein. More precisely, these exemplary embodiments are provided so that the present disclosure will be complete and thorough, and will convey the scope of the present disclosure to those skilled in the art. In these drawings, component sizes and relative sizes may be exaggerated for clarity. The terms used here are only for a purpose of describing specific exemplary embodiments, and are not intended to be limiting. As used herein, unless contents herein clearly indicate otherwise, singular forms "a", "an", and "the" are intended to include these plural forms as well. It will be further understood that these terms "comprising" and/or "including", when used in this specification, indicate existence of the described features, integers, steps, operations, components and/or assemblies, but do not exclude existence or addition of one or more other features, integers, steps, operations, components, assemblies, and/or groups thereof. Unless otherwise indicated, when stated, a value range includes upper and lower limits of the range and any subranges in between.

## Claims

1. A method of transmitting a reference signal, the method being performed by network device, the method comprising:
transmitting (101) a reference signal to a user equipment, wherein, the reference signal is transmitted through a preset number of consecutive subframes, and the reference signal is used for the user equipment to perform synchronization tracking,
**characterized in that**,
transmitting (101) the reference signal to the user equipment comprises:
transmitting the reference signal to the user equipment during a transition process of the user equipment from an inactive state to an active state, wherein, transmitting the reference signal to the user equipment during the transition process of the user equipment from the inactive state to the active state comprises:
transmitting the reference signal to the user equipment after transmitting a wake-up signal to the user equipment, wherein, each subframe of the preset number of consecutive subframes comprises one slot or multiple consecutive slots, and each slot of the one slot or the multiple consecutive slots comprises one or more symbols containing the reference signal.

2. The method of transmitting a reference signal according to claim 1, wherein the transition process from the inactive state to the active state comprises:
the user equipment being configured in a radio resource control, RRC, connected state, RRC_Connected, or in an RRC idle state, RRC_IDLE, or in an RRC inactive state, RRC_Inactive mode, or
a state transition from discontinuous reception sleep, DRX-OFF, to discontinuous reception activation, DRX-ON; or
a state transition from a sleep state to a normal data transmission and reception state; or
a state transition from a sleep state to a control channel monitoring state after receiving a wake-up signal;
wherein the sleep state means a state in which a transceiver circuit of the user equipment is in an off state or a partially off state, and a downlink control channel is not monitored.

3. The method of transmitting a reference signal according to claim 1, wherein the network device is a network device of a non-serving cell of the user equipment;
transmitting the reference signal to the user equipment comprises:
transmitting the reference signal to the user equipment according to received coordination information, wherein the coordination information comprises at least a request indication for transmitting the reference signal, and the coordination information is sent by a network device of a serving cell of the user equipment.

4. The method of transmitting a reference signal according to claim 1, further comprising:
transmitting a notification message to the user equipment, where the notification message is used to notify the user equipment to perform the synchronization tracking based on the reference signal.

5. A method of receiving a reference signal, the method being performed by a user equipment, the method comprising:
receiving (501) a reference signal transmitted by a network device, wherein the reference signal is transmitted through a preset number of consecutive subframes;
performing (502) synchronous tracking according to the reference signal,
**characterized in that**,
receiving (501) the reference signal transmitted by the network device comprises:
receiving the reference signal transmitted by the network device during a transition process of the user equipment from an inactive state to an active state, wherein, receiving the reference signal transmitted by the network device during the transition process of the user equipment from the inactive state to the active state comprises:
receiving the reference signal transmitted by the network device after receiving a wake-up signal from the network device, wherein, each subframe of the preset number of consecutive subframes comprises one slot or multiple consecutive slots, and each slot of the one slot or the multiple consecutive slots comprises one or more symbols containing the reference signal.

6. The method of receiving a reference signal according to claim 5, wherein the transition process from the inactive state to the active state comprises:
the user equipment being configured in a radio resource control, RRC, connected state, RRC_Connected, or in an RRC idle state, RRC_IDLE, or in an RRC inactive state, RRC_Inactive mode, or
a state transition from discontinuous reception sleep, DRX-OFF, to discontinuous reception activation, DRX-ON; or
a state transition from a sleep state to a normal data transmission and reception state; or
a state transition from a sleep state to a control channel monitoring state after receiving a wake-up signal;
wherein the sleep state means a state in which a transceiver circuit of the user equipment is in an off state or a partially off state, and a downlink control channel is not monitored.

7. The method of receiving a reference signal according to claim 5, further comprising:
receiving a notification message transmitted by the network device, wherein the notification message is used to notify the user equipment to perform the synchronization tracking based on the reference signal.

8. A network device, the network device comprising:
a transmitting module (601), configured to transmit a reference signal to a user equipment, wherein, the reference signal is transmitted through a preset number of consecutive subframes, and the reference signal is used for the user equipment to perform synchronization tracking,
**characterized in that**,
the transmitting module (601) is specifically configured to:
transmit the reference signal to the user equipment during a transition process of the user equipment from an inactive state to an active state, wherein, the transmitting module (601) is further configured to:
transmit the reference signal to the user equipment after transmitting a wake-up signal to the user equipment, wherein, each subframe of the preset number of consecutive subframes comprises one slot or multiple consecutive slots, and each slot of the one slot or the multiple consecutive slots comprises one or more symbols containing the reference signal.

9. The network device according to claim 8, wherein the transition process from the inactive state to the active state comprises:
the user equipment being configured in a radio resource control, RRC, connected state, RRC_Connected, or in an RRC idle state, RRC_IDLE, or in an RRC inactive state, RRC_Inactive mode, or
a state transition from discontinuous reception sleep, DRX-OFF, to discontinuous reception activation, DRX-ON; or
a state transition from a sleep state to a normal data transmission and reception state; or
a state transition from a sleep state to a control channel monitoring state after receiving a wake-up signal;
wherein the sleep state means a state in which a transceiver circuit of the user equipment is in an off state or a partially off state, and a downlink control channel is not monitored.

10. The network device according to claim 8, wherein the network device is a network device of a non-serving cell of the user equipment;
the transmitting module (601) is further configured to:
transmit the reference signal to the user equipment according to received coordination information, wherein the coordination information comprises at least a request indication for transmitting the reference signal, and the coordination information is sent by a network device of a serving cell of the user equipment.

11. The network device according to claim 8, further comprising:
a notification transmission module, configured to transmit a notification message to the user equipment, where the notification message is used to notify the user equipment to perform the synchronization tracking based on the reference signal.

12. A user equipment, the user equipment comprising:
a receiving module (701), configured to receive a reference signal transmitted by a network device, wherein the reference signal is transmitted through a preset number of consecutive subframes;
a processing module (702), configured to perform synchronous tracking according to the reference signal,
**characterized in that**,
the receiving module is specifically configured to:
receive the reference signal transmitted by the network device during a transition process of the user equipment from an inactive state to an active state, wherein, the receiving module is specifically configured to:
receive the reference signal transmitted by the network device after receiving a wake-up signal from the network device, wherein, each subframe of the preset number of consecutive subframes comprises one slot or multiple consecutive slots, and each slot of the one slot or multiple consecutive slots comprises one or more symbols containing the reference signal.

13. The user equipment according to claim 12, wherein the transition process from the inactive state to the active state comprises:
the user equipment being configured in a radio resource control, RRC, connected state, RRC_Connected, or in an RRC idle state, RRC_IDLE, or in an RRC inactive state, RRC_Inactive mode, or
a state transition from discontinuous reception sleep, DRX-OFF, to discontinuous reception activation, DRX-ON; or
a state transition from a sleep state to a normal data transmission and reception state; or
a state transition from a sleep state to a control channel monitoring state after receiving a wake-up signal;
wherein the sleep state means a state in which a transceiver circuit of the user equipment is in an off state or a partially off state, and a downlink control channel is not monitored.

14. The user equipment according to claim 12, further comprising:
a notification reception module, configured to receive a notification message transmitted by the network device, wherein the notification message is used to notify the user equipment to perform the synchronization tracking based on the reference signal.

## Patentansprüche

1. Verfahren zum Senden eines Referenzsignals, wobei das Verfahren durch einem Netzwerkgerät durchgeführt wird, wobei das Verfahren umfasst:
Senden (101) eines Referenzsignals an ein Benutzergerät, wobei das Referenzsignal über eine voreingestellte Anzahl von aufeinanderfolgenden Subframes gesendet wird und das Referenzsignal für das Benutzergerät verwendet wird, um eine Synchronisationsverfolgung durchzuführen
**dadurch gekennzeichnet, dass**,
das Senden (101) des Referenzsignals an das Benutzergerät umfasst:
Senden des Referenzsignals an das Benutzergerät während eines Übergangsprozesses des Benutzergeräts von einem inaktiven Zustand zu einem aktiven Zustand, wobei das Senden des Referenzsignals an das Benutzergerät während des Übergangsprozesses des Benutzergeräts von dem inaktiven Zustand zu dem aktiven Zustand umfasst:
Senden des Referenzsignals an das Benutzergerät nach dem Senden eines Aufwecksignals an das Benutzergerät, wobei jeder Subframe der voreingestellten Anzahl von aufeinanderfolgenden Subframes einen Schlitz oder mehrere aufeinanderfolgende Schlitze aufweist und jeder Schlitz des einen Schlitzes oder der mehreren aufeinanderfolgenden Schlitze ein oder mehrere Symbole aufweist, die das Referenzsignal enthalten.

2. Verfahren zum Senden eines Referenzsignals nach Anspruch 1, wobei der Übergangsprozess vom inaktiven Zustand in den aktiven Zustand umfasst:
das Benutzergerät ist konfiguriert, in einem Radio Resource Control, RRC, Verbindungszustand, RRC_Connected, oder in einem RRC-Idle-Zustand, RRC_IDLE, oder in einem RRC-Inaktiv-Zustand, RRC_Inactive, zu sein, oder
einem Zustandsübergang vom diskontinuierlichen Empfangsschlaf, DRX-OFF, zur diskontinuierlichen Empfangsaktivierung, DRX-ON; oder
einem Zustandsübergang von einem Ruhezustand in einen normalen Datensende- und -empfangszustand; oder
einem Zustandsübergang von einem Schlafzustand zu einem Steuerkanalüberwachungszustand nach dem Empfang eines Wecksignals;
wobei der Schlafzustand einen Zustand bedeutet, in dem sich eine Sende-Empfangs-Schaltung des Benutzergeräts in einem ausgeschalteten Zustand oder einem teilweise ausgeschalteten Zustand befindet und ein Abwärtsstrecken-Steuerkanal nicht überwacht wird.

3. Verfahren zum Senden eines Referenzsignals nach Anspruch 1, wobei das Netzwerkgerät ein Netzwerkgerät einer nicht dienenden Zelle des Benutzergeräts ist;
Senden des Referenzsignals an das Benutzergerät, umfassend:
Senden des Referenzsignals an das Benutzergerät gemäß empfangener Koordinationsinformation, wobei die Koordinationsinformation mindestens eine Anforderungsindikation zum Senden des Referenzsignals aufweist und die Koordinationsinformation von einem Netzwerkgerät einer bedienenden Zelle des Benutzergeräts gesendet wird.

4. Verfahren zum Senden eines Referenzsignals nach Anspruch 1, ferner umfassend:
Senden einer Benachrichtigungsnachricht an das Benutzergerät, wobei die Benachrichtigungsnachricht verwendet wird, um das Benutzergerät zu benachrichtigen, die Synchronisationsverfolgung basierend auf dem Referenzsignal durchzuführen.

5. Verfahren zum Empfangen eines Referenzsignals, wobei das Verfahren durch ein Benutzergerät durchgeführt wird, wobei das Verfahren umfasst:
Empfangen (501) eines Referenzsignals, das von einem Netzwerkgerät gesendet wird, wobei das Referenzsignal über eine voreingestellte Anzahl von aufeinanderfolgenden Subframes gesendet wird;
Durchführen (502) einer synchronen Verfolgung gemäß dem Referenzsignal,
**dadurch gekennzeichnet, dass**,
das Empfangen (501) des von dem Netzwerkgerät gesendeten Referenzsignals umfasst:
Empfangen des von dem Netzwerkgerät gesendeten Referenzsignals während eines Übergangsprozesses des Benutzergeräts von einem inaktiven Zustand zu einem aktiven Zustand, wobei das Empfangen des von dem Netzwerkgerät gesendeten Referenzsignals während des Übergangsprozesses des Benutzergeräts von dem inaktiven Zustand zu dem aktiven Zustand umfasst:
Empfangen des von dem Netzwerkgerät gesendeten Referenzsignals nach dem Empfangen eines Aufwecksignals von dem Netzwerkgerät, wobei jeder Subframe der voreingestellten Anzahl von aufeinanderfolgenden Subframes einen Schlitz oder mehrere aufeinanderfolgende Schlitze aufweist und jeder Schlitz des einen Schlitzes oder der mehreren aufeinanderfolgenden Schlitze ein oder mehrere Symbole aufweist, die das Referenzsignal enthalten.

6. Verfahren zum Empfangen eines Referenzsignals nach Anspruch 5, wobei der Übergangsprozess von dem inaktiven Zustand in den aktiven Zustand umfasst:
das Benutzergeräts ist konfiguriert in einem Radio Resource Control, RRC, Verbindungszustand, RRC_Connected, oder in einem RRC-Idle-Zustand, RRC_IDLE, oder in einem RRC-Inaktiv-Zustand, RRC_Inactive, zu sein, oder
einem Zustandsübergang vom diskontinuierlichen Empfangsschlaf, DRX-OFF, zur diskontinuierlichen Empfangsaktivierung, DRX-ON; oder
einem Zustandsübergang von einem Ruhezustand in einen normalen Datensende- und -empfangszustand; oder
einem Zustandsübergang von einem Schlafzustand zu einem Steuerkanalüberwachungszustand nach dem Empfang eines Wecksignals;
wobei der Schlafzustand einen Zustand bedeutet, in dem sich eine Sende-Empfangs-Schaltung des Benutzergeräts in einem ausgeschalteten Zustand oder einem teilweise ausgeschalteten Zustand befindet und ein Abwärtsstrecken-Steuerkanal nicht überwacht wird.

7. Verfahren zum Empfangen eines Referenzsignals nach Anspruch 5, ferner umfassend:
Empfangen einer von dem Netzwerkgerät gesendeten Benachrichtigungsnachricht, wobei die Benachrichtigungsnachricht verwendet wird, um das Benutzergerät zu benachrichtigen, die Synchronisationsverfolgung basierend auf dem Referenzsignal durchzuführen.

8. Netzwerkgerät, wobei das Netzwerkgerät Folgendes aufweist:
ein Sendemodul (601), das so konfiguriert ist, dass es ein Referenzsignal an ein Benutzergerät sendet, wobei das Referenzsignal über eine voreingestellte Anzahl von aufeinanderfolgenden Subframes gesendet wird und das Referenzsignal für das Benutzergerät verwendet wird, um eine Synchronisationsverfolgung durchzuführen,
**dadurch gekennzeichnet, dass**,
das Sendemodul (601) spezifisch konfiguriert ist, um:
das Referenzsignal an das Benutzergerät während eines Übergangsprozesses des Benutzergeräts von einem inaktiven Zustand in einen aktiven Zustand zu senden, wobei das Sendemodul (601) ferner konfiguriert ist, um:
das Referenzsignal an das Benutzergerät nach dem Senden eines Aufwecksignals an das Benutzergerät zu senden, wobei jeder Subframe der voreingestellten Anzahl von aufeinanderfolgenden Subframes einen Schlitz oder mehrere aufeinanderfolgende Schlitze aufweist und jeder Schlitz des einen Schlitzes oder der mehreren aufeinanderfolgenden Schlitze ein oder mehrere Symbole aufweist, die das Referenzsignal enthalten.

9. Netzwerkgerät nach Anspruch 8, wobei der Übergangsprozess vom inaktiven Zustand in den aktiven Zustand umfasst:
das Benutzergerät ist konfiguriert, in einem Radio Resource Control, RRC, Verbindungszustand, RRC_Connected, oder in einem RRC-Idle-Zustand, RRC_IDLE, oder in einem RRC-Inaktiv-Zustand, RRC_Inactive-Modus, zu sein, oder
einem Zustandsübergang vom diskontinuierlichen Empfangsschlaf, DRX-OFF, zur diskontinuierlichen Empfangsaktivierung, DRX-ON; oder
einem Zustandsübergang von einem Ruhezustand in einen normalen Datensende- und -empfangszustand; oder
einem Zustandsübergang von einem Schlafzustand zu einem Steuerkanalüberwachungszustand nach dem Empfang eines Wecksignals;
wobei der Schlafzustand einen Zustand bedeutet, in dem sich eine Sende-Empfangs-Schaltung des Benutzergeräts in einem ausgeschalteten Zustand oder einem teilweise ausgeschalteten Zustand befindet und ein Abwärtsstrecken-Steuerkanal nicht überwacht wird.

10. Netzwerkgerät nach Anspruch 8, wobei das Netzwerkgerät ein Netzwerkgerät einer nicht dienenden Zelle der Benutzerausrüstung ist;
wobei das Sendemodul (601) ferner konfiguriert ist, um:
Senden des Referenzsignals an das Benutzergerät gemäß empfangener Koordinationsinformation, wobei die Koordinationsinformation mindestens eine Anforderungsindikation zum Senden des Referenzsignals aufweist und die Koordinationsinformation von einem Netzwerkgerät einer bedienenden Zelle des Benutzergeräts gesendet wird.

11. Netzwerkgerät nach Anspruch 8, ferner umfassend:
ein Benachrichtigungs-Sendemodul, das so konfiguriert ist, dass es eine Benachrichtigungsnachricht an das Benutzergerät sendet, wobei die Benachrichtigungsnachricht verwendet wird, um das Benutzergerät zu benachrichtigen, die Synchronisationsverfolgung basierend auf dem Referenzsignal durchzuführen.

12. Benutzergerät, wobei das Benutzergerät aufweist:
ein Empfangsmodul (701), das so konfiguriert ist, dass es ein von einem Netzwerkgerät gesendetes Referenzsignal empfängt, wobei das Referenzsignal über eine voreingestellte Anzahl von aufeinanderfolgenden Subframes gesendet wird;
ein Verarbeitungsmodul (702), das so konfiguriert ist, dass es eine synchrone Verfolgung gemäß dem Referenzsignal durchführt,
**dadurch gekennzeichnet, dass**,
das Empfangsmodul spezifisch konfiguriert ist, um:
das Referenzsignal zu empfangen, das von dem Netzwerkgerät während eines Übergangsprozesses des Benutzergeräts von einem inaktiven Zustand zu einem aktiven Zustand gesendet wird, wobei das Empfangsmodul spezifisch konfiguriert ist, um:
das Referenzsignal zu empfangen, das von dem Netzwerkgerät nach dem Empfang eines Aufwecksignals von dem Netzwerkgerät gesendet wird, wobei jeder Subframe der voreingestellten Anzahl von aufeinanderfolgenden Subframes einen Schlitz oder mehrere aufeinanderfolgende Schlitze aufweist und jeder Schlitz des einen Schlitzes oder der mehreren aufeinanderfolgenden Schlitze ein oder mehrere Symbole aufweist, die das Referenzsignal enthalten.

13. Benutzergerät nach Anspruch 12, wobei der Übergangsprozess vom inaktiven Zustand zum aktiven Zustand umfasst:
das Benutzergerät ist konfiguriert, in einem RRC-Verbindungszustand (Radio Resource Control), RRC_Connected, oder in einem RRC-Idle-Zustand, RRC_IDLE, oder in einem RRC-Inaktiv-Zustand, RRC_Inactive, zu sein oder
einem Zustandsübergang vom diskontinuierlichen Empfangsschlaf, DRX-OFF, zur diskontinuierlichen Empfangsaktivierung, DRX-ON; oder
einem Zustandsübergang von einem Ruhezustand in einen normalen Datensende- und -empfangszustand; oder
einem Zustandsübergang von einem Schlafzustand zu einem Steuerkanalüberwachungszustand nach dem Empfang eines Wecksignals;
wobei der Schlafzustand einen Zustand bedeutet, in dem sich eine Sende-Empfangs-Schaltung des Benutzergeräts in einem ausgeschalteten Zustand oder einem teilweise ausgeschalteten Zustand befindet und ein Abwärtsstrecken-Steuerkanal nicht überwacht wird.

14. Benutzergerät nach Anspruch 12, ferner aufweisend:
ein Benachrichtigungsempfangsmodul, das so konfiguriert ist, dass es eine von dem Netzwerkgerät gesendete Benachrichtigungsnachricht empfängt, wobei die Benachrichtigungsnachricht verwendet wird, um das Benutzergerät zu benachrichtigen, die Synchronisationsverfolgung basierend auf dem Referenzsignal durchzuführen.

## Revendications

1. Procédé de transmission d'un signal de référence, le procédé étant effectué par un dispositif de réseau, le procédé comprenant :
la transmission (101) d'un signal de référence à un équipement utilisateur, dans lequel le signal de référence est transmis par le biais d'un nombre prédéfini de sous-trames consécutives, et le signal de référence est utilisé pour que l'équipement utilisateur effectue un suivi de synchronisation,
**caractérisé en ce que**,
la transmission (101) du signal de référence à l'équipement utilisateur comprend :
la transmission du signal de référence à l'équipement utilisateur pendant un processus de transition de l'équipement utilisateur d'un état inactif à un état actif, dans lequel, la transmission du signal de référence à l'équipement utilisateur pendant le processus de transition de l'équipement utilisateur de l'état inactif à l'état actif comprend :
la transmission du signal de référence à l'équipement utilisateur après avoir transmis un signal de réveil à l'équipement utilisateur, dans lequel chaque sous-trame du nombre prédéfini de sous-trames consécutives comprend un créneau ou de multiples créneaux consécutifs, et chaque créneau parmi le créneau ou les multiples créneaux consécutifs comprend un ou plusieurs symboles contenant le signal de référence.

2. Procédé de transmission d'un signal de référence selon la revendication 1, dans lequel le processus de transition de l'état inactif à l'état actif comprend :
l'équipement utilisateur étant configuré dans un état de gestion des ressources radio, RRC, connecté, RRC Connecté, ou dans un état RRC au repos, RRC_IDLE, ou dans un état RRC inactif, mode RRC Inactif, ou
une transition d'état depuis une veille de réception discontinue, DRX-OFF, vers une activation de réception discontinue, DRX-ON ; ou
une transition d'état d'un état de veille à un état normal de transmission et de réception de données ; ou
une transition d'état d'un état de veille à un état de surveillance de canal de commande après réception d'un signal de réveil ;
dans lequel l'état de veille désigne un état dans lequel un circuit émetteur-récepteur de l'équipement utilisateur est dans un état désactivé ou un état partiellement désactivé, et un canal de commande de liaison descendante n'est pas surveillé.

3. Procédé de transmission d'un signal de référence selon la revendication 1, dans lequel le dispositif de réseau est un dispositif de réseau d'une cellule non de desserte de l'équipement utilisateur ;
la transmission du signal de référence à l'équipement utilisateur comprend :
la transmission du signal de référence à l'équipement utilisateur en fonction d'informations de coordination reçues, dans lequel les informations de coordination comprennent au moins une indication de demande pour transmettre le signal de référence, et les informations de coordination sont envoyées par un dispositif de réseau d'une cellule de desserte de l'équipement utilisateur.

4. Procédé de transmission d'un signal de référence selon la revendication 1, comprenant en outre :
la transmission d'un message de notification à l'équipement utilisateur, dans lequel le message de notification est utilisé pour notifier à l'équipement utilisateur d'effectuer le suivi de synchronisation sur la base du signal de référence.

5. Procédé de réception d'un signal de référence, le procédé étant effectué par un équipement utilisateur, le procédé comprenant :
la réception (501) d'un signal de référence transmis par un dispositif de réseau, dans lequel le signal de référence est transmis par le biais d'un nombre prédéfini de sous-trames consécutives ;
le fait d'effectuer (502) un suivi synchrone en fonction du signal de référence,
**caractérisé en ce que**,
la réception (501) du signal de référence transmis par le dispositif réseau comprend :
la réception du signal de référence transmis par le dispositif de réseau pendant un processus de transition de l'équipement utilisateur d'un état inactif à un état actif, dans lequel, la réception du signal de référence transmis par le dispositif de réseau pendant le processus de transition de l'équipement utilisateur de l'état inactif à l'état actif comprend :
la réception du signal de référence transmis par le dispositif de réseau après avoir reçu un signal de réveil à partir du dispositif de réseau, dans lequel, chaque sous-trame du nombre prédéfini de sous-trames consécutives comprend un créneau ou de multiples créneaux consécutifs, et chaque créneau parmi le créneau ou les multiples créneaux consécutifs comprend un ou plusieurs symboles contenant le signal de référence.

6. Procédé de réception d'un signal de référence selon la revendication 5, dans lequel le processus de transition de l'état inactif à l'état actif comprend :
l'équipement utilisateur étant configuré dans un état de gestion des ressources radio, RRC, connecté, RRC Connecté, ou dans un état RRC au repos, RRC_IDLE, ou dans un état RRC inactif, mode RRC Inactif, ou
une transition d'état depuis une veille de réception discontinue, DRX-OFF, vers une activation de réception discontinue, DRX-ON ; ou
une transition d'état d'un état de veille à un état normal de transmission et de réception de données ; ou
une transition d'état d'un état de veille à un état de surveillance de canal de commande après réception d'un signal de réveil ;
dans lequel l'état de veille désigne un état dans lequel un circuit émetteur-récepteur de l'équipement utilisateur est dans un état désactivé ou un état partiellement désactivé, et un canal de commande de liaison descendante n'est pas surveillé.

7. Procédé de réception d'un signal de référence selon la revendication 5, comprenant en outre :
la réception d'un message de notification transmis par le dispositif de réseau, dans lequel le message de notification est utilisé pour notifier à l'équipement utilisateur d'effectuer le suivi de synchronisation sur la base du signal de référence.

8. Dispositif de réseau, le dispositif de réseau comprenant :
un module de transmission (601), configuré pour transmettre un signal de référence à un équipement utilisateur, dans lequel le signal de référence est transmis par le biais d'un nombre prédéfini de sous-trames consécutives, et le signal de référence est utilisé pour que l'équipement utilisateur effectue un suivi de synchronisation,
**caractérisé en ce que**,
le module de transmission (601) est spécifiquement configuré pour :
transmettre le signal de référence à l'équipement utilisateur pendant un processus de transition de l'équipement utilisateur d'un état inactif à un état actif, dans lequel, le module de transmission (601) est en outre configuré pour :
transmettre le signal de référence à l'équipement utilisateur après avoir transmis un signal de réveil à l'équipement utilisateur, dans lequel chaque sous-trame du nombre prédéfini de sous-trames consécutives comprend un créneau ou de multiples créneaux consécutifs, et chaque créneau parmi le créneau ou les multiples créneaux consécutifs comprend un ou plusieurs symboles contenant le signal de référence.

9. Dispositif de réseau selon la revendication 8, dans lequel le processus de transition de l'état inactif à l'état actif comprend :
l'équipement utilisateur étant configuré dans un état de gestion des ressources radio, RRC, connecté, RRC Connecté, ou dans un état RRC au repos, RRC_IDLE, ou dans un état RRC inactif, mode RRC Inactif, ou
une transition d'état depuis une veille de réception discontinue, DRX-OFF, vers une activation de réception discontinue, DRX-ON ; ou
une transition d'état d'un état de veille à un état normal de transmission et de réception de données ; ou
une transition d'état d'un état de veille à un état de surveillance de canal de commande après réception d'un signal de réveil ;
dans lequel l'état de veille désigne un état dans lequel un circuit émetteur-récepteur de l'équipement utilisateur est dans un état désactivé ou un état partiellement désactivé, et un canal de commande de liaison descendante n'est pas surveillé.

10. Dispositif de réseau selon la revendication 8, dans lequel le dispositif de réseau est un dispositif de réseau d'une cellule non de desserte de l'équipement utilisateur ;
le module de transmission (601) est en outre configuré pour :
transmettre le signal de référence à l'équipement utilisateur en fonction d'informations de coordination reçues, dans lequel les informations de coordination comprennent au moins une indication de demande pour transmettre le signal de référence, et les informations de coordination sont envoyées par un dispositif de réseau d'une cellule de desserte de l'équipement utilisateur.

11. Dispositif de réseau selon la revendication 8, comprenant en outre :
un module de transmission de notification, configuré pour transmettre un message de notification à l'équipement utilisateur, dans lequel le message de notification est utilisé pour notifier à l'équipement utilisateur d'effectuer le suivi de synchronisation sur la base du signal de référence.

12. Équipement utilisateur, l'équipement utilisateur comprenant :
un module de réception (701), configuré pour recevoir un signal de référence transmis par un dispositif de réseau, dans lequel le signal de référence est transmis par le biais d'un nombre prédéfini de sous-trames consécutives ;
un module de traitement (702), configuré pour effectuer un suivi synchrone en fonction du signal de référence,
**caractérisé en ce que**,
le module de réception est spécifiquement configuré pour :
recevoir le signal de référence transmis par le dispositif de réseau pendant un processus de transition de l'équipement utilisateur d'un état inactif à un état actif, dans lequel, le module de réception est spécifiquement configuré pour :
recevoir le signal de référence transmis par le dispositif de réseau après avoir reçu un signal de réveil à partir du dispositif de réseau, dans lequel, chaque sous-trame du nombre prédéfini de sous-trames consécutives comprend un créneau ou de multiples créneaux consécutifs, et chaque créneau parmi le créneau ou les multiples créneaux consécutifs comprend un ou plusieurs symboles contenant le signal de référence.

13. Équipement utilisateur selon la revendication 12, dans lequel le processus de transition de l'état inactif à l'état actif comprend :
l'équipement utilisateur étant configuré dans un état de gestion des ressources radio, RRC, connecté, RRC Connecté, ou dans un état RRC au repos, RRC_IDLE, ou dans un état RRC inactif, mode RRC Inactif, ou
une transition d'état depuis une veille de réception discontinue, DRX-OFF, vers une activation de réception discontinue, DRX-ON ; ou
une transition d'état d'un état de veille à un état normal de transmission et de réception de données ; ou
une transition d'état d'un état de veille à un état de surveillance de canal de commande après réception d'un signal de réveil ;
dans lequel l'état de veille désigne un état dans lequel un circuit émetteur-récepteur de l'équipement utilisateur est dans un état désactivé ou un état partiellement désactivé, et un canal de commande de liaison descendante n'est pas surveillé.

14. Équipement utilisateur selon la revendication 12, comprenant en outre :
un module de réception de notification, configuré pour recevoir un message de notification transmis par le dispositif de réseau, dans lequel le message de notification est utilisé pour notifier à l'équipement utilisateur d'effectuer le suivi de synchronisation sur la base du signal de référence.
